# EUROPEAN PATENT SPECIFICATION

(11) **EP 3 827 970 B1**
(45) Date of publication and mention of the grant of the patent: **07.02.2024**
(21) Application number: 20203989.7
(22) Date of filing: 27.10.2020
(51) Int. Cl.: B29C 64/209, B22F 10/31, B29C 64/25, B29C 64/393, B33Y 40/00, B33Y 50/02, B33Y 30/00, B29C 64/30

(54) **A THREE-DIMENSIONAL PRINTING DEVICE PROVIDING AUTOMATIC CALIBRATION**
DREIDIMENSIONALE DRUCKVORRICHTUNG MIT BEREITSTELLUNG VON AUTOMATISCHER KALIBRIERUNG
DISPOSITIF D'IMPRESSION TRIDIMENSIONNELLE FOURNISSANT UN ÉTALONNAGE AUTOMATIQUE

(30) Priority: 27.11.2019 TR 201918551
(43) Date of publication of application: 02.06.2021
(73) Proprietor: Arçelik Anonim Sirketi, 34445 Istanbul (TR)
(72) Inventor: TUNCEL, Furkan, 34445 ISTANBUL (TR); COBAN, Omer Burak, 34445 ISTANBUL (TR); DONMEZ, Ersin, 34950 ISTANBUL (TR)

(56) References cited:
- US-A1- 2007 228 592
- US-B1- 9 908 290
- US-B2- 9 205 690

## Description

The present invention relates to a three-dimensional printing device providing automatic calibration.

With the advance of production technology, 3D printers have become an important production tool. 3D printers produce an exactly identical copy of a 3D solid object modeled in a computer. Due to the use of different materials in production depending on the choice of the user, different products can be obtained. One of the materials mostly used today is metal and the other polymer. Production in 3D printers is based on processing the raw material in layers. Production is carried out as a result of the adhesion of the molten filament to the printing table through the nozzle, and the adhesion of subsequent layers to the previous layer. The production of the first layer is very important for the correct production. If the first layer does not adhere correctly on the printing table, the material shrinks after cooling and is separated from the printing table in an uncontrolled manner. As a result of the first layer separating from the printing table, other layers cannot be delivered correctly. The position of the printing plate must be properly adjusted such that the first layer can be correctly delivered on the printing plate. The distance between the nozzle and the printing table must be equal to the thickness of the first layer, and said distance must not change in any way while producing the first layer. If said distance is less than necessary, the required amount of molten filament cannot leave the nozzle. Therefore, the filament which cannot leave the nozzle accumulates in the nozzle and causes the nozzle to clog in the course of time. The clogging of the nozzle causes failure to print.

In the state of the art European Patent Application No. EP3135460, a three-dimensional printing device is disclosed, comprising a plurality of nozzles, wherein the automatic calibration is performed by means of a proximity sensor.

The state of the art document US2007228592A1 discloses a three-dimensional printing device according to the preamble of claim 1.

The aim of the present invention is the realization of a three-dimensional printing device providing ease of production.

The three-dimensional printing device realized in order to attain the aim of the present invention, explicated in the first claim and the respective claims thereof, comprises a body; a printing head which is provided on the body; a printing table; and a nozzle which is provided on the printing head. The material is delivered to the printing head such that the layers are formed on the printing table by means of the nozzle.

The three-dimensional printing device of the present invention comprises a calibration member which is provided on the printing head; a plurality of actuation members which are provided on the body; and a control unit which determines the position of the printing head as the calibration member contacts the printing table and the actuation member. By means of the control unit, the movement limits of the printing head are determined as the calibration member contacts the actuation member present on various surfaces and the printing table in the horizontal surface.

In the present invention, the calibration member comprises a first arm; a second which is arranged so as to form almost a right angle in the horizontal plane with the first arm; and an electronic switch which is provided almost opposite to the first arm. By means of the electronic switch, the surface of the printing table is swept so as to determine the operation area.

In an embodiment of the present invention, the three-dimensional printing device comprises a protrusion which is provided on the printing head and a housing which is provided on the calibration member and which is fitted over the protrusion to enable the rotation of the calibration member. The protrusion and the housing are configured to be circular such that the calibration member can rotate on the printing head.

In an embodiment of the present invention, the three-dimensional printing device comprises a return spring with one end disposed on the first arm and the other end on the calibration member. By means of the return spring, the calibration member can be locked at certain positions and can start to move again.

In the present invention, the three-dimensional printing device comprises a first actuation member and a second actuation member which are disposed on the body. The first actuation member is positioned at one side of the printing head while the second actuation member is positioned at the other side thereof. The first actuation member and the second actuation member enable the printing head to be aligned from right and left.

In the present invention, the three-dimensional printing device comprises the control unit executing an algorithm comprising the steps of moving the printing head towards the first actuation member, making the first arm contact the first actuation member, making the calibration member rotate approximately 90 degrees, moving the printing table towards the printing head, making the electronic switch contact the printing table to determine the operation area, moving the printing head towards the second actuation member and returning the calibration member to the initial position as the second arm hits the second actuation member. The printing head moves towards the first actuation member until the first arm hits the first actuation member. Upon hitting the first actuation member, the calibration member rotates approximately 90 degrees. Thus, the electronic switch is directed towards the printing table. The printing table moves towards the printing head. The electronic switch sweeps the printing table and determines the operation area. After the printing table is swept by means of the electronic switch, the printing head moves towards the second actuation member and the second arm contacts the second actuation member. Thus, the calibration member returns to the initial position.

In an embodiment of the present invention, the three-dimensional printing device comprises the control unit which compares the reference values prerecorded thereon by the producer with the values measured from the printing table by means of the electronic switch and determines the size and position of the printing table. Thus, the first layer is enabled to be firmly and durably formed on the printing table.

By means of the present invention, a three-dimensional printing device providing ease of production is realized. By means of the calibration member and the control unit, the calibration process is automatically carried out before production, and thus the first layer is enabled to be delivered onto the printing table in an aligned manner.

A three-dimensional printing device realized in order to attain the aim of the present invention is illustrated in the attached figures, where:

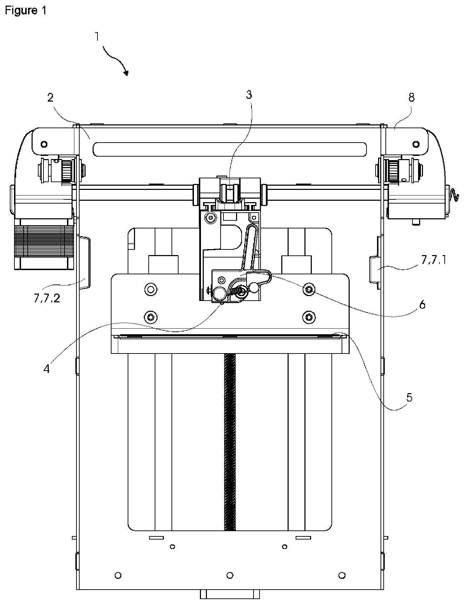

Figure 1 - is the front view of the three-dimensional printing device.

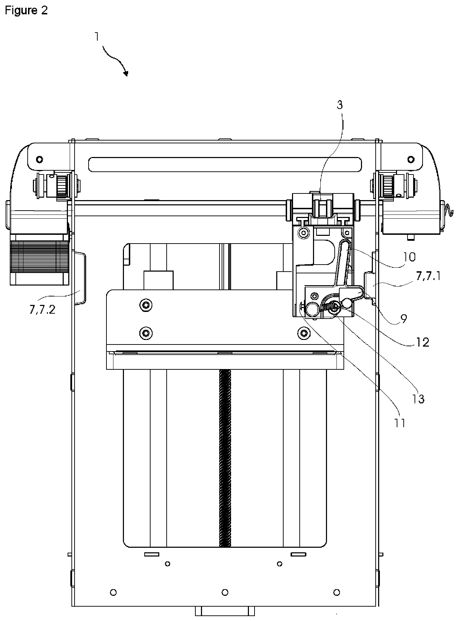

Figure 2 - is the front view of the three-dimensional printing device when the first arm contacts the first actuation member.

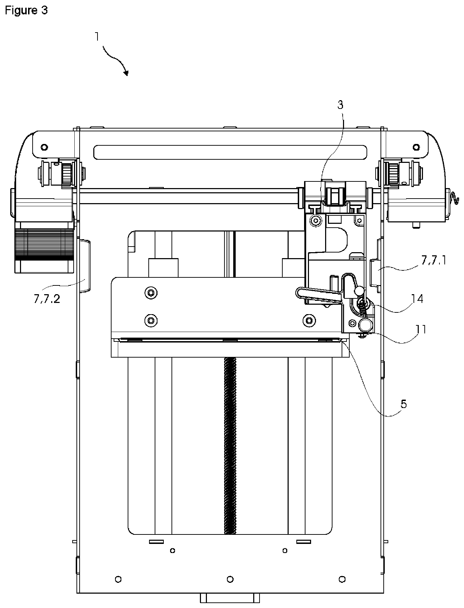

Figure 3 - is the front view of the three-dimensional printing device when the electronic switch contacts the printing table.

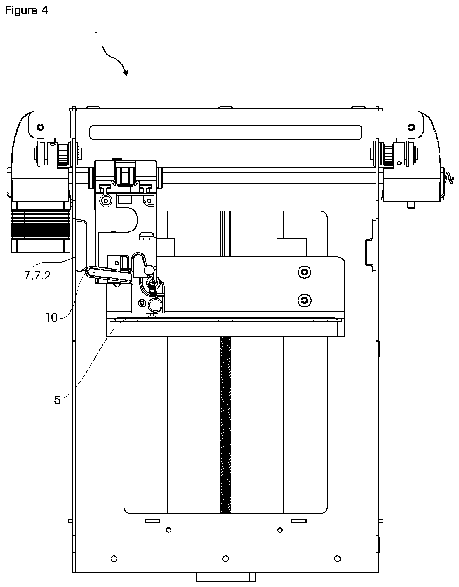

Figure 4 - is the front view of the three-dimensional printing device when the second arm contacts the second actuation member.

The elements illustrated in the figures are numbered as follows:
1. Three-dimensional printing device
2. Body
3. Printing head
4. Nozzle
5. Printing table
6. Calibration member
7. Actuation member
   7.1- First actuation member
   7.2- Second actuation member
8. Control unit
9. First arm
10. Second arm
11. Electronic switch
12. protrusion
13. Housing
14. Return spring

The three-dimensional printing device (1) comprises a body (2); a printing head (3) which is provided on the body (2) and which performs the printing operation; a nozzle (4) which is provided on the printing head (3) and which is used for delivering and processing the material; and a printing table (5) whereon the material leaving the nozzle (4) is delivered to form the product. The molten material is delivered onto the printing head (3) provided on the body (2). The material is sent out of the nozzle (4) provided on the printing head (3) so as to create a form. The material leaving the nozzle (4) creates the product as layers on the printing table (5).

The three-dimensional printing device (1) of the present invention comprises a calibration member (6) which is provided on the printing head (3); a plurality of actuation members (7) which are provided on the body (2) in the vicinity of the printing head (3); and a control unit (8) which determines the position of the printing head (3) as the calibration member (7) contacts the actuation member (7) and the printing table (5). The position for production is determined as the printing head (3) contacts the actuation member (7) and the printing table (5). By means of the control unit (8), the production limits are defined. By means of the automatic calibration operation, ease of use is provided, and the first layer is delivered onto the printing table (5) more durably.

In the present invention, the three-dimensional printing device (6) comprises the calibration member (6) having a first arm (9); a second arm (10) which is arranged so as to form almost a right angle with the first arm (9); and an electronic switch (11) which is provided on the side opposite to the side where the first arm (9) is positioned. The first arm (9) and the second arm (10) contact the actuation member (7) from the sides. Thus, the production operation is aligned from the sides. The electronic switch (11) sweeps the surface of the printing table (5) and determines the region where the molten material is to be formed.

In an embodiment of the present invention, the three-dimensional printing device (1) comprises a protrusion (12) which is provided on the printing head (3) and a housing (13) which is provided on the calibration member (6) and which is fitted over the protrusion (12) so as to rotate on the protrusion (12). The housing (13) on the calibration member (6) is fitted over the protrusion (12) on the printing head (3). By means of the circular form of the protrusion (12) and the housing (13), the calibration member (6) can rotate on the printing head (3).

In an embodiment of the present invention, the three-dimensional printing device (1) comprises a return spring (14) with one end disposed on the first arm (9) and the other end on the calibration member (6), which enables the calibration member (6) to be locked. By means of the return spring (14), the calibration member (6) is locked while rotating on the printing head (3).

In the present invention, the three-dimensional printing device (1) comprises a first actuation member (7.1) which is positioned at one side of the printing head (3) and a second actuation member (7.2) which is positioned at the other side of the printing head (3). The first actuation member (7.1) is positioned at one side of the printing head (3) and the second actuation member (7.2) is positioned at the other side thereof. The first actuation member (7.1) and the second actuation member (7.2) enable the printing head (3) to be aligned from right and left.

In the present invention, the three-dimensional printing device (1) comprises the control unit (8) executing an algorithm comprising the steps of moving the printing head (3) towards the first actuation member (7.1) so as to make the first arm (9) contact the first actuation member (7.1), making the calibration member (6) rotate approximately 90 degrees on the protrusion (12) as the first arm (9) contacts the first actuation member (7.1), moving the printing table (5) towards the printing head (3) so as to make the electronic switch (11) determine the limits of the printing table (5), moving the printing head (3) towards the second actuation member (7.2) and making the second arm (10) contact the second actuation member (7.2) so as to make the calibration member (6) return to the initial position. The printing head (3) moves towards the first actuation member (7.1). As the first arm (9) contacts the first actuation member (7.1), the calibration member (6) rotates approximately 90 degrees. Upon the rotation of the calibration member (6), the electronic switch (11) is directed towards the printing table (5). By means of the electronic switch (11) sweeping the surface of the printing table (5), the production areas on the printing table (5) are determined. After the electronic switch (11) completes the sweeping operation, the printing head (3) moves towards the second actuation member (7.2), and as the second arm (10) contacts the second actuation member (7.2), the calibration member (6) returns to the initial position and the material is delivered to the printing table (5) from the nozzle (4).

In an embodiment of the present invention, the three-dimensional printing device (1) comprises the control unit (8) which compares the size values of the printing table (5) prerecorded thereon by the producer with the values measured from the printing table (5) by means of the electronic switch (11) and determines the size and position of the printing table (5). The dimensions and inclination values of the printing table (5) for ideal production are predefined on the control unit (8) by the producer. The printing table (5) values measured by the electronic switch (11) are compared with the reference values on the control unit (8). Thus, the ideal distance between the printing head (3) and the printing table (5) is determined.

By means of the present invention, a three-dimensional printing device (1) providing automatic calibration is realized. By automatically adjusting the positions of the printing head (3) and the printing table (5), an efficient first layer production is realized on the printing table (5). Thus, other layers can be easily added onto the first layer, providing ease of production.

## Claims

1. A three-dimensional printing device (1) **comprising** a body (2); a printing head (3) which is provided on the body (2) and which performs the printing operation; a nozzle (4) which is provided on the printing head (3) and which is used for processing the material; and a printing table (5) whereon the material leaving the nozzle (4) is delivered, a calibration member (6) which is provided on the printing head (3); a plurality of actuation members (7) which are provided on the body (2) in the vicinity of the printing head (3); and a control unit (8) which determines the position of the printing head (3) as the calibration member (6) contacts one actuation member (7) and the printing table (5);
a first actuation member (7.1) which is positioned at one side of the printing head (3) and a second actuation member (7.2) which is positioned at the other side of the printing head (3), **characterized by** the calibration member (6) having a first arm (9) and a second arm (10) which is arranged so as to form almost a right angle with the first arm (9); and an electronic switch (11) which is provided on the side opposite to the side where the first arm (9) is positioned, the control unit (8) being configured to execute an algorithm comprising the steps of moving the printing head (3) towards the first actuation member (7.1) so as to make the first arm (9) contact the first actuation member (7.1), making the calibration member (6) rotate approximately 90 degrees as the first arm (9) contacts the first actuation member (7.1), moving the printing table (5) towards the printing head (3) so as to make the electronic switch (11) determine the limits of the printing table (5), moving the printing head (3) towards the second actuation member (7.2) and making the second arm (10) contact the second actuation member (7.2) so as to make the calibration member (6) return to the initial position.

2. The three-dimensional printing device (1) as in Claim 1, **characterized by** a protrusion (12) which is provided on the printing head (3) and a housing (13) which is provided on the calibration member (6) and which is fitted over the protrusion (12) so as to rotate on the protrusion (12).

3. The three-dimensional printing device (1) as in Claim 1 and Claim 2, **characterized by** a return spring (14) with one end disposed on the first arm (9) and the other end on the calibration member (6), which enables the calibration member (6) to be locked.

4. The three-dimensional printing device (1) as in any one of the above claims,
**characterized by** the control unit (8) being configured to compare the size values of the printing table (5) prerecorded thereon by the producer with the values measured from the printing table (5) by means of the electronic switch (11) and to determine the size and position of the printing table (5).

## Patentansprüche

1. Eine dreidimensionale Druckvorrichtung (1) **umfasst** einen Körper (2); einen Druckkopf (3), der am Körper (2) vorgesehen ist und den Druckvorgang ausführt; eine am Druckkopf (3) vorgesehene Düse (4), die zur Verarbeitung des Materials dient; und einen Drucktisch (5), auf den das aus der Düse (4) austretende Material abgegeben wird, ein Kalibrierungselement (6), das am Druckkopf (3) vorgesehen ist; eine Vielzahl von Betätigungselementen (7), die am Körper (2) in der Nähe des Druckkopfs (3) vorgesehen sind; und eine Steuereinheit (8), die die Position des Druckkopfs (3) bestimmt, wenn das Kalibrierungselement (6) ein Betätigungselement (7) und den Drucktisch (5) berührt; ein erstes Betätigungselement (7.1), das auf einer Seite des Druckkopfs (3) positioniert ist, und ein zweites Betätigungselement (7.2), das auf der anderen Seite des Druckkopfs (3) positioniert ist, **gekennzeichnet ist sie dadurch,** dass das Kalibrierelement (6) einen ersten Arm (9) und einen zweiten Arm (10) aufweist, der so angeordnet ist, dass er mit dem ersten Arm (9) nahezu einen rechten Winkel bildet; und einen elektronischen Schalter (11), der auf der Seite vorgesehen ist, die der Seite gegenüberliegt, auf der der erste Arm (9) positioniert ist, wobei die Steuereinheit (8) so konfiguriert ist, dass sie einen Algorithmus ausführt, der die folgenden Schritte umfasst: Bewegen des Druckkopfs (3) in Richtung des ersten Betätigungselements (7.1), so dass der erste Arm (9) das erste Betätigungselement (7.1) berührt, wodurch sich das Kalibrierungselement (6) um ungefähr 90 Grad dreht, wenn der erste Arm (9) das erste Betätigungselement (7.1) berührt, bewegen des Drucktisches (5) in Richtung des Druckkopfes (3), so dass der elektronische Schalter (11) die Grenzen des Drucktisches (5) bestimmt, Bewegen des Druckkopfes (3) in Richtung des zweiten Betätigungselements (7.2). und Berühren des zweiten Arms (10) mit dem zweiten Betätigungselement (7.2), um das Kalibrierungselement (6) in die Ausgangsposition zurückkehren zu lassen.

2. Die dreidimensionale Druckvorrichtung (1), wie in Anspruch 1 aufgeführt, **ist dadurch gekennzeichnet, dass** ein Vorsprung (12), der auf dem Druckkopf (3) vorgesehen ist, und ein Gehäuse (13), das auf dem Kalibrierungselement (6) vorgesehen ist und das über dem Vorsprung (12) angebracht ist, so dass es sich auf dem Vorsprung (12) dreht.

3. Die dreidimensionale Druckvorrichtung (1), wie in Anspruch 1 oder 2 aufgeführt, **ist dadurch gekennzeichnet, dass** eine Rückstellfeder (14) mit einem Ende am ersten Arm (9) und mit dem anderen Ende am Kalibrierelement (6) angeordnet ist, was eine Verriegelung des Kalibrierelements (6) ermöglicht.

4. Die dreidimensionale Druckvorrichtung (1), wie in einem der vorherigen Ansprüchen aufgeführt, **ist dadurch gekennzeichnet, dass** die Steuereinheit (8) so konfiguriert ist, dass sie die vom Hersteller auf dem Drucktisch (5) voreingetragenen Größenwerte mit den vom Drucktisch (5) mittels des elektronischen Schalters (11) gemessenen Werten vergleicht, um die Größe und Position des Drucktisches (5) zu bestimmen.

## Revendications

1. Un appareil d'impression tridimensionnelle (1) **comprenant** un corps (2), une tête d'impression (3) placée sur le corps (2) et qui effectue l'opération d'impression, une buse (4) placée sur la tête d'impression (3) et utilisée pour traiter le matériau, et une table d'impression (5) sur laquelle le matériau sortant de la buse (4) est délivré, un élément d'étalonnage (6) placé sur la tête d'impression (3), une pluralité d'éléments d'actionnement (7) placés à proximité de la tête d'impression (3) et une unité de commande (8) qui détermine la position de la tête d'impression (3) en fonction de la position de la tête d'impression (3) ; une pluralité d'éléments d'actionnement (7) situés sur le corps (2) à proximité de la tête d'impression (3) ; et une unité de commande (8) qui détermine la position de la tête d'impression (3) lorsque l'élément d'étalonnage (6) entre en contact avec un élément d'actionnement (7) et la table d'impression (5) ;un premier élément d'actionnement (7.1) qui est positionné d'un côté de la tête d'impression (3) et un second élément d'actionnement (7.2) qui est positionné de l'autre côté de la tête d'impression (3), **caractérisé par le fait que** l'élément de calibrage (6) a un premier bras (9) et un second bras (10) qui est disposé de manière à former presque un angle droit avec le premier bras (9) ; et un commutateur électronique (11) qui est prévu sur le côté opposé au côté où le premier bras (9) est positionné, l'unité de commande (8) étant configurée pour exécuter un algorithme comprenant les étapes consistant à déplacer la tête d'impression (3) vers le premier élément d'actionnement (7. 1) de manière à ce que le premier bras (9) entre en contact avec le premier élément d'actionnement (7.1), en faisant tourner l'élément de calibrage (6) d'environ 90 degrés lorsque le premier bras (9) entre en contact avec le premier élément d'actionnement (7. 1), en déplaçant la table d'impression (5) vers la tête d'impression (3) de manière à ce que le commutateur électronique (11) détermine les limites de la table d'impression (5), en déplaçant la tête d'impression (3) vers le deuxième élément d'actionnement (7.2) et en faisant en sorte que le deuxième bras (10) entre en contact avec le deuxième élément d'actionnement (7.2) de manière à ce que l'élément d'étalonnage (6) revienne à la position initiale.

2. Un appareil d'impression tridimensionnelle (1) selon la déclaration 1, **caractérisé par** une protubérance (12) prévue sur la tête d'impression (3) et un boîtier (13) prévu sur l'élément de calibrage (6) et monté sur la protubérance (12) de manière à tourner sur la protubérance (12).

3. Un appareil d'impression tridimensionnelle (1) selon la déclaration 1 et la déclaration 2, **caractérisé par** un ressort de rappel (14) dont une extrémité est disposée sur le premier bras (9) et l'autre extrémité sur l'organe de calibrage (6), qui permet de verrouiller l'organe de calibrage (6).

4. Un appareil d'impression tridimensionnelle (1) selon l'une quelconque des déclarations précédentes, **caractérisé par le fait que** l'unité de commande (8) est configurée pour comparer les valeurs de taille de la table d'impression (5) préenregistrées sur celle-ci par le producteur avec les valeurs mesurées à partir de la table d'impression (5) au moyen du commutateur électronique (11) afin de déterminer la taille et la position de la table d'impression (5).
